# EUROPEAN PATENT APPLICATION

(11) **EP 4 207 513 A1**
(43) Date of publication of application: **05.07.2023**
(21) Application number: 21874337.5
(22) Date of filing: 24.09.2021
(51) Int. Cl.: H01S 3/067, G02F 1/39, G02F 1/383, H04J 14/02

(54) **OPTICAL FIBER AMPLIFICATION APPARATUS**

(30) Priority: 30.09.2020 CN 202011064634
(71) Applicant: Huawei Technologies Co., Ltd., Shenzhen, Guangdong 518129 (CN)
(72) Inventor: YU, Yongze, Shenzhen, Guangdong 518129 (CN); XIONG, Di, Shenzhen, Guangdong 518129 (CN)
(74) Representative: Pfenning, Meinig & Partner mbB
(86) International application number: PCT/CN2021/120073
(87) International publication number: WO 2022/068676

(57) **Abstract**

An optical fiber amplification apparatus is disclosed, including an optical receiving port (201), a first optical output port (202), a second optical output port (203), a gain medium (204), a pump laser (205), reflection films (206), and a transmission-reflection film (207). The pump laser (205) activates a function of the gain medium (204) to amplify an optical signal. A multiplexed optical signal including a first-waveband optical signal and a second-waveband optical signal is incident onto the gain medium (204) through the optical receiving port (201). The reflection films (206) enable the multiplexed optical signal to be reflected back and forth in the gain medium (204). After the first-waveband optical signal reaches a first target gain, the first-waveband optical signal is output from the gain medium (204) to the first optical output port (202) through the transmission-reflection film (207). The second-waveband optical signal is reflected back and forth and continuously amplified in the gain medium (204). After the second-waveband optical signal reaches a second target gain, the second-waveband optical signal is output from the gain medium (204) to the second optical output port (203). This optical fiber amplification apparatus is configured to implement overall amplification for at least two bands and implement flexible gain control.

## Description

This application claims priority to Chinese Patent Application No. 202011064634.5, filed with the China National Intellectual Property Administration on September 30, 2020 and entitled "OPTICAL FIBER AMPLIFICATION APPARATUS", which is incorporated herein by reference in its entirety.

### TECHNICAL FIELD

This application relates to the field of optical communication, and in particular, to an optical fiber amplification apparatus.

### BACKGROUND

With an increasing demand for optical transmission communication capacities in various industries, a wavelength division multiplexing (Wavelength Division Multiplexing, WDM) technology has become a main transmission technology in an optical transmission system. In the wavelength division multiplexing technology, a plurality of optical signals with different wavelengths are multiplexed into one optical fiber for transmission. That is, one optical fiber may have a plurality of transmission channels. In a WDM system, a key component that determines a communication capacity is an optical fiber amplifier. Currently, erbium-doped optical fiber amplifiers have been widely used in communication networks, and may amplify communication signals in C band (1524 nm to 1572 nm) and L band (1574 nm to 1610 nm). During C-band amplification, an average inversion rate of erbium ions in an erbium-doped optical fiber maintains at about 60%; and during L-band amplification, an average inversion rate of erbium ions in the erbium-doped optical fiber maintains at about 40%. Therefore, it is very difficult to implement C+L band amplification through a single erbium-doped optical fiber.

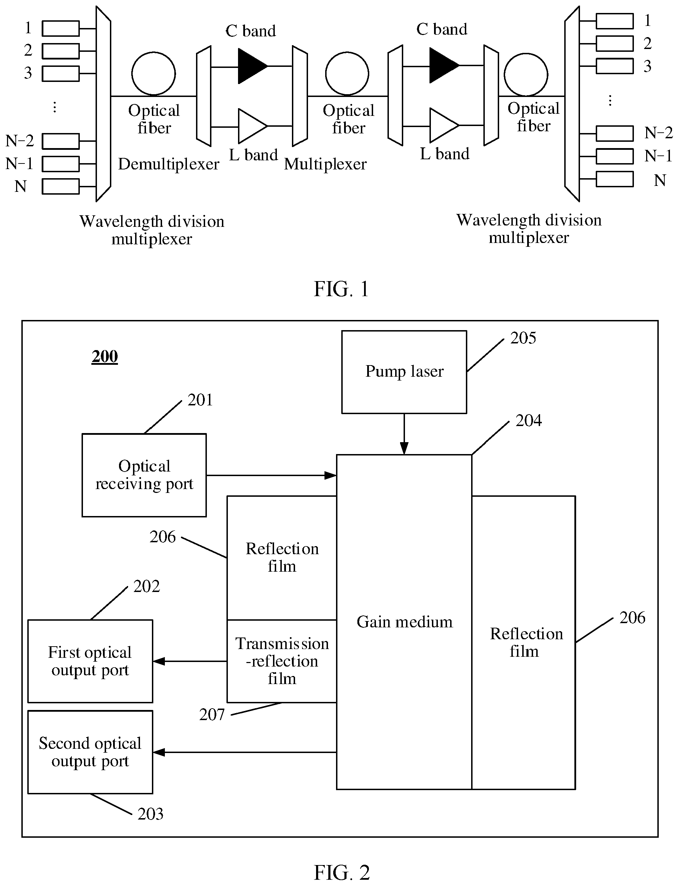

Currently, a C-band amplifier and an L-band amplifier are usually connected in parallel. FIG. 1 shows an optical amplification system including a C-band amplifier and an L-band amplifier. In an optical amplification process, an input end and an output end use a wavelength division multiplexer (Wavelength Division Multiplexer, WDM) to perform multiplexing and demultiplexing respectively, and the C-band amplifier and the L-band amplifier that are connected in parallel amplify a C-band optical signal and an L-band optical signal respectively.

Based on the foregoing solution, the C-band amplifier and the L-band amplifier connected in parallel are based on two sets of amplifier structures. Consequently, this results in a complex system, and gains in the C band and the L band need to be controlled separately.

### SUMMARY

Embodiments of this application provide an optical fiber amplification apparatus, to implement overall amplification for at least two bands and implement flexible gain control.

According to a first aspect, an embodiment of this application provides an optical fiber amplification apparatus. The optical fiber amplification apparatus includes an optical receiving port, a first optical output port, a second optical output port, a gain medium, a pump laser, reflection films, and a transmission-reflection film. The optical receiving port is coupled to the gain medium. The pump laser is coupled to the gain medium. The first optical output port and the second optical output port are coupled to the gain medium. The reflection films are located on a first surface and a second surface of the gain medium, the first surface and the second surface are parallel to each other, and the transmission-reflection film is located on the first surface or the second surface. The pump laser is configured to activate a function of the gain medium to amplify an optical signal, where a gain effect of the gain medium for the optical signal is related to a transmission distance of laser light output by the pump laser in the gain medium, and the gain medium meets amplification gains for a first-waveband optical signal and a second-waveband optical signal. The optical receiving port is configured to receive a multiplexed optical signal including the first-waveband optical signal and the second-waveband optical signal, and enable the multiplexed optical signal to be incident onto the gain medium. The reflection films are configured to enable the first-waveband optical signal and the second-waveband optical signal to be reflected back and forth in the gain medium. The transmission-reflection film is configured to: after the first-waveband optical signal reaches a first target gain, enable the first-waveband optical signal to be output from the gain medium and transmitted to the first optical output port; enable the second-waveband optical signal to be reflected back and forth and continuously amplified in the gain medium; and after the second-waveband optical signal reaches a second target gain, enable the second-waveband optical signal to be output from the gain medium and transmitted to the second optical output port.

In the optical amplification apparatus provided in this embodiment, the gain medium is activated by using the laser light emitted by the pump laser, and as the laser light emitted by the pump laser spreads in the gain medium, the gain effect of the gain medium changes, so that the gain medium meets amplification gains of at least two optical signals. Then, the at least two optical signals are multiplexed and input into the gain medium, so that a multiplexed optical signal is reflected back and forth in the gain medium. After a corresponding target gain is reached, amplified optical signals are output separately. This implements overall amplification for at least two bands and implements flexible gain control for the at least two bands.

Optionally, there are the following several possible implementations for positions and structures of the pump laser and the gain medium:
In a possible implementation, the pump laser is located on a third surface of the gain medium. The third surface is perpendicular to the first surface, and perpendicular to the second surface. The pump laser is configured to perform overall excitation on the gain medium. That is, the laser light emitted by the pump laser may cover the gain medium. In this solution, when overall excitation is performed on the gain medium by using the laser light emitted by the pump laser, a beam shaping component may be coupled between the pump laser and the gain medium. The beam shaping component is configured to shape the laser light output by the pump laser, to enable a light spot formed by the laser light output by the pump laser to cover the gain medium. Optionally, the beam shaping component is a lens or a spatial light modulator.

Optionally, the reflection films are configured to reflect the first-waveband optical signal and the second-waveband optical signal, and the transmission-reflection film is configured to transmit the first-waveband optical signal and reflect the second-waveband optical signal.

In another possible implementation, the laser light emitted by the pump laser is multiplexed with the first-waveband optical signal and the second-waveband optical signal and then input into the gain medium, to implement partial excitation on the gain medium. To be specific, gain excitation is implemented on an optical path part within the gain medium by using the laser light emitted by the pump laser. In this solution, when the laser light emitted by the pump laser is multiplexed with the first-waveband optical signal and the second-waveband optical signal and input into the gain medium, the laser light output by the pump laser is multiplexed with the first-waveband optical signal and the second-waveband optical signal through an optical multiplexing component. Optionally, the optical multiplexing component is a dichroic mirror or a wavelength division multiplexer.

Optionally, the reflection films are configured to reflect the first-waveband optical signal, the second-waveband optical signal, and a third-waveband optical signal output by the pump laser; and the transmission-reflection film is configured to transmit the first-waveband optical signal and reflect the second-waveband optical signal and the third-waveband optical signal.

Optionally, a collimator is included between the optical receiving port and the gain medium; a collimator is included between the first optical output port and the gain medium; and a collimator is included between the second optical output port and the gain medium. The collimator is configured to enable an output optical signal to be coupled to an optical fiber.

Optionally, the first-waveband optical signal is a C-band optical signal, and the second-waveband optical signal is an L-band optical signal. In this way, the optical fiber amplification apparatus can implement overall amplification for C band and L band, and implement flexible gain control for the C band and the L band. Therefore, in this solution, when overall excitation is performed on the gain medium by using the laser light emitted by the pump laser, the reflection films are configured to reflect the C-band optical signal and the L-band optical signal, and the transmission-reflection film is configured to transmit the C-band optical signal and reflect the L-band optical signal. When the laser emitted by the pump laser is multiplexed with the C-band optical signal and the L-band optical signal and then input into the gain medium, to implement partial excitation on the gain medium, the reflection films are configured to reflect the C-band optical signal, the L-band optical signal, and the laser light emitted by the pump laser, and the transmission-reflection film is configured to transmit the C-band optical signal, and reflect the L-band optical signal and the laser light emitted by the pump laser.

Optionally, when the optical fiber amplification apparatus is configured to amplify the C-band optical signal and the L-band optical signal, the gain medium may be an erbium-doped gain medium. In this case, an inversion rate of erbium ions in the erbium-doped gain medium decreases with an increase in a transmission distance of the laser light emitted by the pump laser in the erbium-doped gain medium. That is, a longer transmission distance of the laser light emitted by the pump laser in the erbium-doped gain medium indicates a smaller inversion rate of the erbium ions in the erbium-doped gain medium, so that different amplification gain effects are achieved for different bands.

Optionally, the erbium-doped gain medium is a bulk glass material or a bulk crystal material doped with erbium elements. In this embodiment, the term "bulk" may mean a cylindrical object with mutually perpendicular or parallel surfaces, such as a cuboid or a cube.

### BRIEF DESCRIPTION OF DRAWINGS

FIG. 1 is a schematic diagram of a structure of an optical amplification system in which a C-band amplifier and an L-band amplifier are connected in parallel;
FIG. 2 is a schematic diagram of an embodiment of an optical fiber amplification apparatus according to an embodiment of this application;
FIG. 3 is a schematic diagram of another embodiment of an optical fiber amplification apparatus according to an embodiment of this application;
FIG. 4 is a schematic diagram of another embodiment of an optical fiber amplification apparatus according to an embodiment of this application;
FIG. 5 is a schematic diagram of another embodiment of an optical fiber amplification apparatus according to an embodiment of this application;
FIG. 6 is a schematic diagram of a relationship between an inversion rate of erbium ions in an erbium-doped gain medium and a transmission distance of pump laser light according to an embodiment of this application;
FIG. 7 is a schematic diagram of another embodiment of an optical fiber amplification apparatus according to an embodiment of this application; and
FIG. 8 is a schematic diagram of another embodiment of an optical fiber amplification apparatus according to an embodiment of this application.

### DESCRIPTION OF EMBODIMENTS

To make objectives, technical solutions, and advantages of this application clearer, the following describes embodiments of this application with reference to the accompanying drawings. It is clear that the described embodiments are merely some but not all of embodiments of this application. Persons of ordinary skill in the art may learn that, as new application scenarios emerge, the technical solutions provided in embodiments of this application are also applicable to a similar technical problem.

In the specification, claims, and accompanying drawings of this application, the terms "first", "second", and the like are intended to distinguish between similar objects but do not necessarily indicate a specific order or sequence. It can be understood that data termed in such a way are interchangeable in appropriate circumstances, so that embodiments described herein can be implemented in other orders than the order illustrated or described herein. In addition, the terms "include", "contain" and any other variants mean to cover a non-exclusive inclusion. For example, a process, method, system, product, or device that includes a list of steps or modules is not necessarily limited to those steps or modules, but may include other steps or modules not expressly listed or inherent to such a process, method, system, product, or device. Names or numbers of steps in this application do not mean that the steps in method procedures need to be performed in a time/logical sequence indicated by the names or the numbers. An execution sequence of the steps in the procedure that have been named or numbered can be changed based on a technical objective to be achieved, provided that same or similar technical effect can be achieved. Unit division in this application is logical division and may be other division during actual implementation. For example, a plurality of units may be combined or integrated into another system, or some features may be ignored or not performed. In addition, the displayed or discussed mutual couplings or direct couplings or communication connections may be implemented through some interfaces. The indirect couplings or communication connections between the units may be implemented in electronic or other similar forms. This is not limited in this application. In addition, units or subunits described as separate parts may or may not be physically separate, may or may not be physical units, or may be distributed into a plurality of circuit units. Some or all of the units may be selected according to actual requirements to achieve the objectives of the solutions of this application.

With an increasing demand for optical transmission communication capacities in various industries, a wavelength division multiplexing (Wavelength Division Multiplexing, WDM) technology has become a main transmission technology in an optical transmission system. In the wavelength division multiplexing technology, a plurality of optical signals with different wavelengths are multiplexed into one optical fiber for transmission. That is, one optical fiber may have a plurality of transmission channels. In a WDM system, a key component that determines a communication capacity is an optical fiber amplifier. Currently, erbium-doped optical fiber amplifiers have been widely used in communication networks, and may amplify communication signals in C band (1524 nm to 1572 nm) and L band (1574 nm to 1610 nm). During C-band amplification, an average inversion rate of erbium ions in an erbium-doped optical fiber maintains at about 60%; and during L-band amplification, an average inversion rate of erbium ions in the erbium-doped optical fiber maintains at about 40%. Therefore, it is very difficult to implement C+L band amplification through a single erbium-doped optical fiber. Currently, a C-band amplifier and an L-band amplifier are usually connected in parallel. FIG. 1 shows an optical amplification system including a C-band amplifier and an L-band amplifier. In an optical amplification process, an input end and an output end use a wavelength division multiplexer (Wavelength Division Multiplexer, WDM) to perform multiplexing and demultiplexing respectively, and the C-band amplifier and the L-band amplifier that are connected in parallel amplify a C-band optical signal and an L-band optical signal respectively. Based on the foregoing solution, the C-band amplifier and the L-band amplifier that are connected in parallel are based on two sets of amplifier structures, and consequently, a complex system is formed; and gains in the C band and the L band need to be controlled separately.

To resolve this problem, specifically, as shown in FIG. 2, an embodiment of this application provides an optical fiber amplification apparatus 200. The optical fiber amplification apparatus 200 mainly includes an optical receiving port 201, a first optical output port 202, a second optical output port 203, a gain medium 204, a pump laser 205, reflection films 206 and a transmission-reflection film 207. The optical receiving port 201 is coupled to the gain medium 204. The pump laser 205 is coupled to the gain medium 204. The first optical output port 202 and the second optical output port 203 are coupled to the gain medium 204. The reflection films 206 are located on a first surface and a second surface of the gain medium 204, the first surface and the second surface are parallel to each other, and the transmission-reflection film 207 is located on the first surface or the second surface. The optical receiving port 201 is configured to receive a multiplexed optical signal including a first-waveband optical signal and a second-waveband optical signal, and enable the multiplexed optical signal to be incident onto the gain medium 204. The pump laser 205 is configured to activate a function of the gain medium 204 to amplify an optical signal, where a gain effect of the gain medium 204 for the optical signal is related to an optical path distance of laser light emitted by the pump laser 205 in the gain medium 204, and the gain medium 204 meets amplification gains for the first-waveband optical signal and the second-waveband optical signal. The reflection films 206 are configured to enable the first-waveband optical signal and the second-waveband optical signal to be reflected back and forth in the gain medium 204. The transmission-reflection film 207 is configured to: after the first-waveband optical signal reaches a first target gain, enable the first-waveband optical signal to be output from the gain medium 204 and transmitted to the first optical output port 202; enable the second-waveband optical signal to be reflected back and forth and continuously amplified in the gain medium 204; and after the second-waveband optical signal reaches a second target gain, enable the second-waveband optical signal to be output from the gain medium 204 and transmitted to the second optical output port 203.

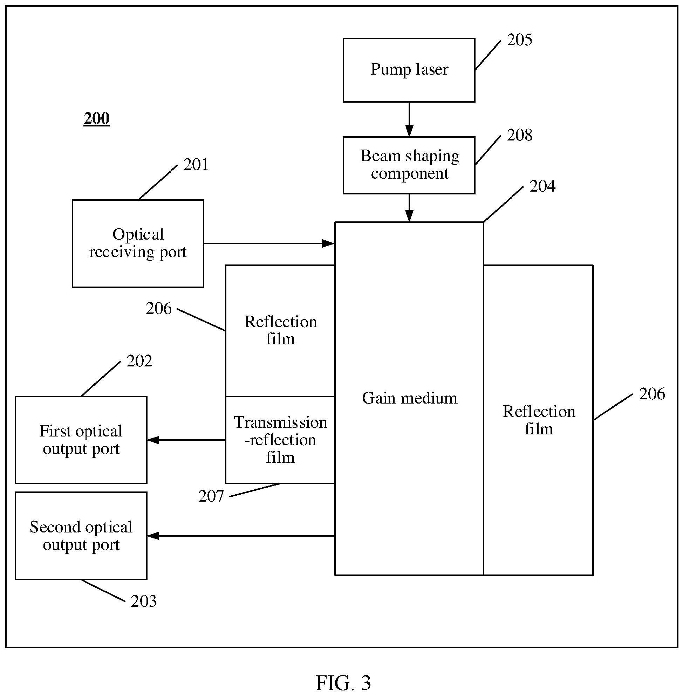

Optionally, there are the following several possible implementations for positions and structures of the pump laser 205 and the gain medium 204:
In a possible implementation, the pump laser 205 is located on a third surface of the gain medium 204. The third surface is perpendicular to the first surface, and perpendicular to the second surface. The pump laser 205 is configured to perform overall excitation on the gain medium 204. That is, the laser light emitted by the pump laser 205 may cover the gain medium 204. In this solution, as shown in FIG. 3, a beam shaping component 208 may be coupled between the pump laser 205 and the gain medium 204. The beam shaping component 208 is configured to shape the laser light output by the pump laser 205, to enable a light spot formed by the laser light output by the pump laser 205 to cover the gain medium 204. In this case, the reflection films 206 may be configured only to reflect the first-waveband optical signal and the second-waveband optical signal, and the transmission-reflection film 207 may be configured to transmit the first-waveband optical signal and reflect the second-waveband optical signal.

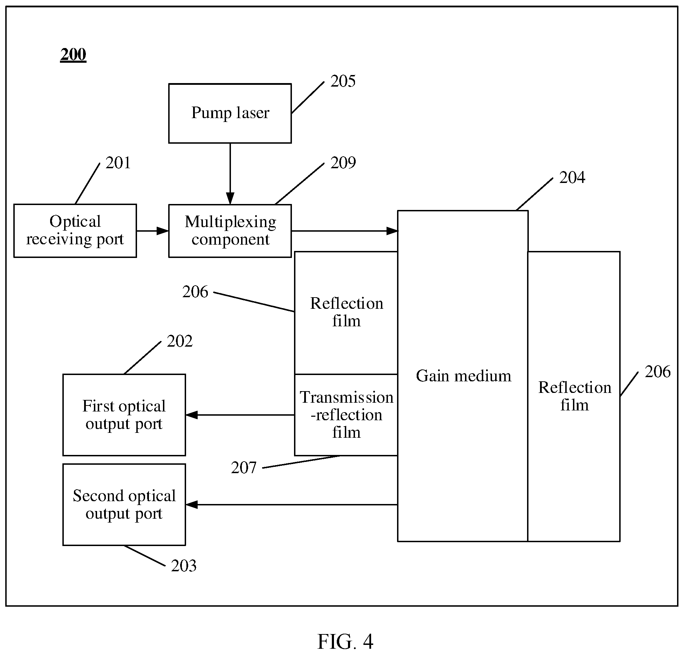

In another possible implementation, the laser light emitted by the pump laser 205 is multiplexed with the first-waveband optical signal and the second-waveband optical signal and then input into the gain medium 204, to implement partial excitation on the gain medium 204. To be specific, gain excitation is implemented on an optical path part within the gain medium 204 by using the laser light emitted by the pump laser 205. In this solution, as shown in FIG. 4, the laser light output by the pump laser may be multiplexed with the first-waveband optical signal and the second-waveband optical signal through an optical multiplexing component 209 (for example, a dichroic mirror or a wavelength division multiplexer). In this case, the reflection films 206 are configured to reflect the first-waveband optical signal, the second-waveband optical signal, and a third-waveband optical signal output by the pump laser 205; and the transmission-reflection film 207 is configured to transmit the first-waveband optical signal and reflect the second-waveband optical signal and the third-waveband optical signal output by the pump laser 205.

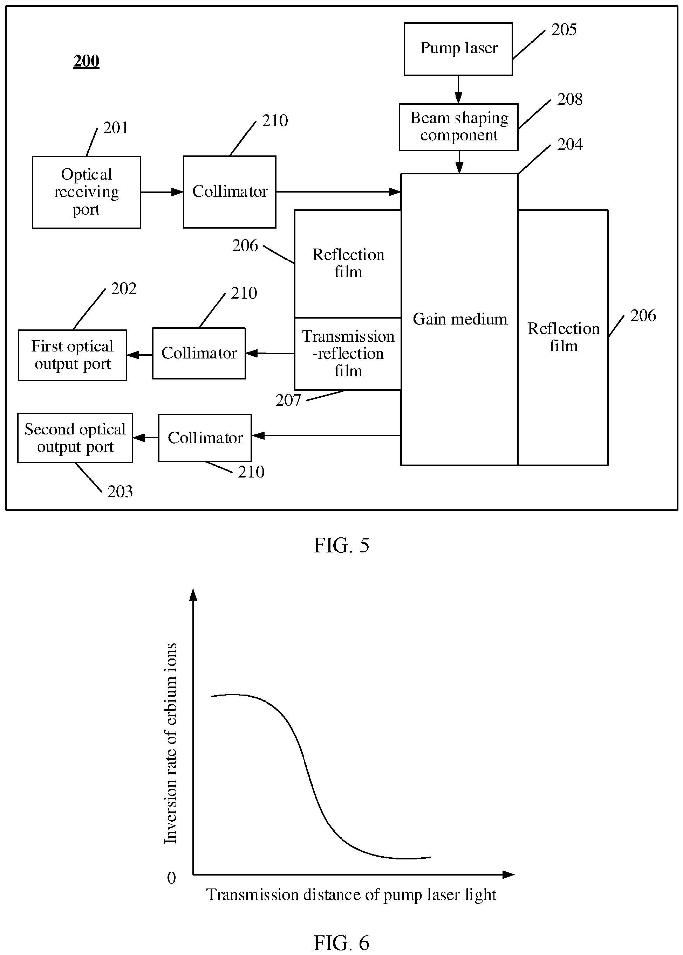

Optionally, in an example solution, as shown in FIG. 5, a collimator 210 is included between the optical receiving port 201 and the gain medium 204; a collimator 210 is included between the first optical output port 202 and the gain medium 204; and a collimator 210 is included between the second optical output port 203 and the gain medium 204. The collimator 210 is configured to enable an output optical signal to be coupled to an optical fiber.

Optionally, the first-waveband optical signal is a C-band optical signal, and the second-waveband optical signal is an L-band optical signal. In this case, optionally, the gain medium is an erbium-doped gain medium. Erbium ions in the erbium-doped gain medium may absorb pump laser light. Therefore, intensity distribution of the pump laser light in the erbium-doped gain medium gradually decreases with a transmission direction of the pump laser light. After absorbing energy of the pump laser light, the erbium ions transit to an upper energy level to achieve ion number inversion. An inversion rate of the erbium ions is related to the intensity of the pump laser light. Therefore, the inversion rate of the erbium ions is consistent with the distribution of the intensity of the pump laser light, and the inversion rate of the erbium ions gradually decreases with the transmission direction of the pump laser light, which may be specifically shown in FIG. 6. In the transmission direction of the pump laser light, a shorter transmission distance indicates a larger inversion rate of the erbium ions, and with an increase in the transmission distance, the inversion rate of the erbium ions decreases. However, for the erbium-doped gain medium, different inversion rates of the erbium ions correspond to different gain coefficients of optical signals. Specifically, when the inversion rate of the erbium ions is about 50% or less, the erbium-doped gain medium may absorb the C-band optical signal and amplify the L-band optical signal; and when the inversion rate of the erbium ions is about 50% or more, the erbium-doped gain medium may amplify the C-band optical signal and weakly amplify the L-band optical signal. Therefore, optical amplification of the C-band optical signal and the L-band optical signal can be implemented by controlling the inversion rate of erbium ions.

Optionally, the erbium-doped gain medium is a bulk glass material or a bulk crystal material doped with erbium elements. In this embodiment, the term "bulk" may mean a cylindrical object with mutually perpendicular or parallel surfaces, such as a cuboid or a cube.

The following uses an example in which the first-waveband optical signal is a C-band optical signal and the second-waveband optical signal is an L band optical signal for description.

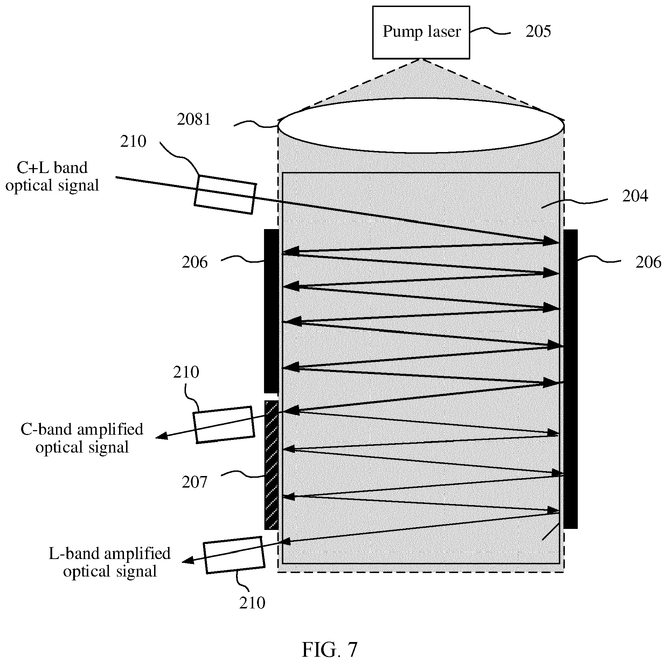

In an example solution, as shown in FIG. 7, a lens 2081 (where the lens 2081 is an optional solution of the beam shaping component 208, the beam shaping component 208 may alternatively be another component such as a spatial light modulator, and details are not described herein) is coupled between the pump laser 205 and the gain medium 204, and the lens 2081 may shape the laser light emitted by the pump laser 205, so that the pump laser 205 may perform overall excitation on the gain medium. The reflection film 206 and the transmission-reflection film 207 are located on a left-side surface of the gain medium 204 shown in FIG. 7, and the reflection film 206 is also provided on a right-side surface of the gain medium 204 shown in FIG. 7. In this embodiment, C+L band signal light is incident from the left-side surface shown in FIG. 7, and therefore, the left-side surface shown in FIG. 7 is an incident surface of the signal light in the gain medium 204. The right-side surface shown in FIG. 7 is parallel to the incident surface of the signal. The incident surface of the signal light and an incident surface of the laser light output by the pump laser 205 in the gain medium 204 are two adjacent surfaces that are perpendicular to each other. The collimator 210 is included at each of a position for multiplexing and inputting the C-band optical signal and the L-band optical signal, a position for outputting the C-band amplified optical signal, and a position for outputting the L-band amplified optical signal. In the optical fiber amplification apparatus 200, a wavelength of the laser light output by the pump laser is 974 nanometers (nm) or 1480 nm. The C+L band signal light is first collimated by the collimators 210, and then incident onto the gain medium 204. The C-band signal light and the L-band signal light are first incident on an area with a high erbium ion inversion rate (where the inversion rate is greater than 50%) in the gain medium 204, and reflected back and forth through the reflection films 206 on two sides of the gain medium 204 (at this time, the reflection films 206 implement high reflection of the C+L band signal light). When the C-band signal light reaches a target gain, the C-band signal light and the L-band signal light are reflected to the transmission-reflection film 207 (at this time, the transmission-reflection film 207 implements transmission for the C-band signal light and high reflection for the L-band signal light), and then the C-band signal light passes through the transmission-reflection film 207, and is collimated by the collimator 210 and output. The remaining L-band signal light continues to be reflected back and forth in the gain medium 204. At this time, the L-band signal light spreads in an area with an erbium ion inversion rate that is less than 50%, to amplify the L-band signal. After the L-band signal light reaches a target gain, the L-band signal light is reflected to an area without a transmission-reflection film and a reflection film, and then is collimated by the collimator 210 and output. Through the foregoing process, overall amplification of the C-band signal light and the L-band signal light is implemented.

In the solution shown in FIG. 7, for positions of the reflection films 206 and the transmission-reflection film 207, the target gain of the C-band signal light and the target gain of the L-band signal light may be obtained through theoretical calculation based on parameters such as a known pump power, absorption and emission coefficients of a material, and a length of a path for amplifying the optical signal. After the target gain of the C-band signal light and the target gain of the L-band signal light are obtained, positions of the reflection films 206 and the transmission-reflection film 207 on the gain medium 204 are determined through corresponding conversion.

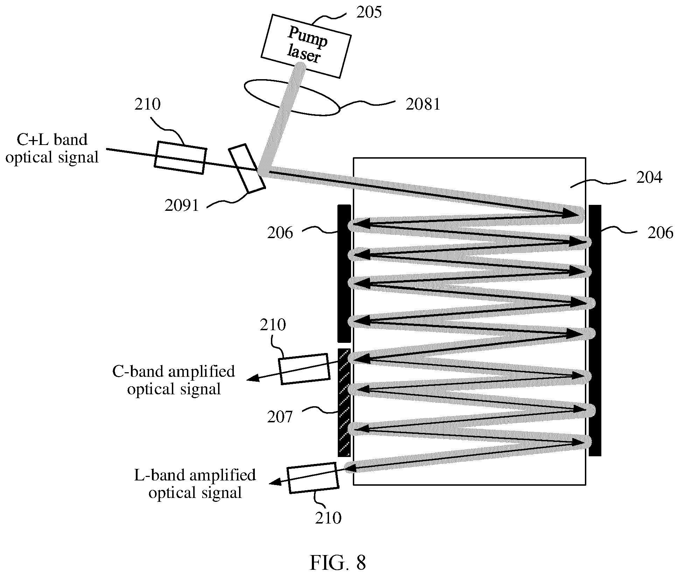

In an example solution, as shown in FIG. 8, a lens 2081 (where the lens 2081 is an optional solution of the beam shaping component 208, the beam shaping component 208 may alternatively be another component such as a spatial light modulator, and details are not described herein) is coupled between the pump laser 205 and a dichroic mirror 2091 (where the dichroic mirror 2091 is an optional solution of the optical multiplexing component 209, the optical multiplexing component may alternatively be a wavelength division multiplexer, and details are not described herein), and the lens 2081 may shape the laser light emitted by the pump laser 205. The dichroic mirror 2091 multiplexes C+L band signal light collimated by the collimators 210 and the laser light output by the pump laser 205, and outputs multiplexed signal light to the gain medium 204. The reflection film 206 and the transmission-reflection film 207 are located on a left-side surface of the gain medium 204 shown in FIG. 8, and the reflection film 206 is also provided on a right-side surface of the gain medium 204 shown in FIG. 8. In this embodiment, the C+L band signal light is incident from the left-side surface shown in FIG. 8, and therefore, the left-side surface shown in FIG. 8 is an incident surface of the signal light in the gain medium 204. The right-side surface shown in FIG. 8 is parallel to the incident surface of the signal. The collimator 210 is included at each of a position for outputting the C-band amplified optical signal and a position for outputting the L-band amplified optical signal. In the optical fiber amplification apparatus 200, a wavelength of the laser light output by the pump laser 205 is 974 nanometers (nm) or 1480 nm. The C+L band signal light is first collimated by the collimators 210, multiplexed, through the dichroic mirror 2091, with the laser light output by the pump laser 205, and then incident onto the gain medium 204. In this way, the C+L band signal light and the laser light output by the pump laser 205 are first incident on an area with a high erbium ion inversion rate (where the inversion rate is greater than 50%) in the gain medium 204, and reflected back and forth through the reflection films 206 on two sides of the gain medium 204 (at this time, the reflection films 206 may implement high reflection of the C+L band signal light and the laser light output by the pump laser). When the C-band signal light reaches a target gain, the C-band signal light and the L-band signal light are reflected to the transmission-reflection film 207 (at this time, the transmission-reflection film 207 may implement transmission for C band and high reflection for L band and the laser light output by the pump laser), and then the C-band signal light passes through the transmission-reflection film 207, and is collimated by the collimator 210 and output. The remaining L-band signal light and the laser light output by the pump laser continue to be reflected back and forth in the gain medium 204. At this time, the L-band signal light spreads in an area with an erbium ion inversion rate that is less than 50%, to amplify the L-band signal. After the L-band signal light reaches a target gain, the L-band signal light is reflected to an area without a transmission-reflection film and a reflection film, and then is collimated by the collimator 210 and output. Through the foregoing process, overall amplification of the C-band signal light and the L-band signal light is implemented.

In the solution shown in FIG. 8, for positions of the reflection films 206 and the transmission-reflection film 207, the target gain of the C-band signal light and the target gain of the L-band signal light may be obtained through theoretical calculation based on parameters such as a known pump power, absorption and emission coefficients of a material, and a length of a path for amplifying the optical signal. After the target gain of the C-band signal light and the target gain of the L-band signal light are obtained, positions of the reflection films 206 and the transmission-reflection film 207 on the gain medium 204 are determined through corresponding conversion.

It may be clearly understood by persons skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it can be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electronic, mechanical, or other forms.

The units described as separate parts may or may not be physically separate, and parts displayed as units may or may not be physical units, may be located at one position, or may be distributed on a plurality of network units. Some or all of the units may be selected according to actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the current technology, or all or some of the technical solutions may be implemented in the form of a software product. The computer software product is stored in a storage medium and includes several instructions for instructing a computer device (which may be a personal computer, a server, a network device, or the like) to perform all or some of the steps of the methods described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

In conclusion, the foregoing embodiments are merely intended for describing the technical solutions of this application but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application.

## Claims

1. An optical fiber amplification apparatus, comprising:
an optical receiving port, a first optical output port, a second optical output port, a gain medium, a pump laser, reflection films, and a transmission-reflection film, wherein
the optical receiving port is coupled to the gain medium;
the pump laser is coupled to the gain medium;
the first optical output port and the second optical output port are coupled to the gain medium;
the reflection films are located on a first surface and a second surface of the gain medium, the first surface and the second surface are parallel to each other, and the transmission-reflection film is located on the first surface or the second surface;
the pump laser is configured to activate a function of the gain medium to amplify an optical signal, wherein a gain effect of the gain medium for the optical signal is related to a transmission distance of laser light output by the pump laser in the gain medium, and the gain medium meets amplification gains for a first-waveband optical signal and a second-waveband optical signal;
the optical receiving port is configured to receive a multiplexed optical signal comprising the first-waveband optical signal and the second-waveband optical signal, and enable the multiplexed optical signal to be incident onto the gain medium;
the reflection films are configured to enable the first-waveband optical signal and the second-waveband optical signal to be reflected back and forth in the gain medium; and
the transmission-reflection film is configured to: after the first-waveband optical signal reaches a first target gain, enable the first-waveband optical signal to be output from the gain medium and transmitted to the first optical output port; enable the second-waveband optical signal to be reflected back and forth and continuously amplified in the gain medium; and after the second-waveband optical signal reaches a second target gain, enable the second-waveband optical signal to be output from the gain medium and transmitted to the second optical output port.

2. The apparatus according to claim 1, wherein the pump laser is located on a third surface of the gain medium, the third surface is perpendicular to the first surface, and perpendicular to the second surface, and the pump laser is configured to perform overall excitation on the gain medium; or
an optical signal output by the pump laser is multiplexed with the multiplexed optical signal and input into the gain medium, to perform excitation on an optical path through which the multiplexed signal in the gain medium passes.

3. The apparatus according to claim 2, wherein when the pump laser is located on the third surface of the gain medium, a beam shaping component is further comprised between the pump laser and the gain medium, and the beam shaping component is configured to shape the laser light output by the pump laser, to enable a light spot formed by the laser light output by the pump laser to cover the gain medium.

4. The apparatus according to claim 3, wherein the beam shaping component is a lens or a spatial light modulator.

5. The apparatus according to claim 3 or 4, wherein the reflection films are configured to reflect the first-waveband optical signal and the second-waveband optical signal, and the transmission-reflection film is configured to transmit the first-waveband optical signal and reflect the second-waveband optical signal.

6. The apparatus according to claim 2, wherein the laser light output by the pump laser is multiplexed with the first-waveband optical signal and the second-waveband optical signal through an optical multiplexing component.

7. The apparatus according to claim 6, wherein the optical multiplexing component is a dichroic mirror or a wavelength division multiplexer.

8. The apparatus according to claim 6 or 7, wherein the reflection films are configured to reflect the first-waveband optical signal, the second-waveband optical signal, and a third-waveband optical signal output by the pump laser; and the transmission-reflection film is configured to transmit the first-waveband optical signal and reflect the second-waveband optical signal and the third-waveband optical signal.

9. The apparatus according to any one of claims 1 to 8, wherein a collimator is comprised between the optical receiving port and the gain medium; a collimator is comprised between the first optical output port and the gain medium; and a collimator is comprised between the second optical output port and the gain medium.

10. The apparatus according to any one of claims 1 to 9, wherein the first-waveband optical signal is a C-band optical signal, and the second-waveband optical signal is an L-band optical signal.

11. The apparatus according to claim 10, wherein the gain medium is an erbium-doped gain medium; and
an inversion rate of erbium ions in the erbium-doped gain medium decreases with an increase in a transmission distance of the laser light output by the pump laser in the erbium-doped gain medium.

12. The apparatus according to claim 11, wherein the erbium-doped gain medium is a bulk glass material or a bulk crystal material doped with erbium elements.
